# EUROPEAN PATENT SPECIFICATION

(11) **EP 4 309 919 B1**
(45) Date of publication and mention of the grant of the patent: **19.11.2025**
(21) Application number: 21931703.9
(22) Date of filing: 22.11.2021
(51) Int. Cl.: B60C 13/00

(54) **TIRE**
REIFEN
PNEUMATIQUE

(30) Priority: 16.03.2021 JP 2021042926
(43) Date of publication of application: 24.01.2024
(73) Proprietor: BRIDGESTONE CORPORATION, Chuo-ku Tokyo 104-8340 (JP)
(72) Inventor: ITAI, Yoko, Tokyo 104-8340 (JP)
(74) Representative: Marks & Clerk LLP
(86) International application number: PCT/JP2021/042850
(87) International publication number: WO 2022/195960

(56) References cited:
- EP-A1- 3 747 674
- WO-A1-2018/059751
- WO-A1-2018/059758
- WO-A1-2018/059758
- WO-A1-2019/111828
- WO-A1-2019/111828
- JP-A- 2002 522 294
- JP-A- 2010 052 471
- JP-A- 2011 105 231
- JP-A- 2015 024 722
- JP-A- 2019 081 514

## Description

### Technical Field

The present invention relates to a tire.

### Background Art

Sometimes decoration formed by fine recesses and protrusions on a smooth surface is provided to a side face of a tire (see, for example, Japanese Patent Application Laid-Open (JP-A) No. 2019-099094).

WO 2018/059758 A1 (D1) relates to vehicle tires with a lateral wall with at least one lateral wall decoration which extends at least over a circumferential section of the lateral wall. The lateral wall decoration has decorative surfaces made of first and second surface elements which have a structured surface, wherein the first surface elements absorb less light than the second surface elements. The lateral wall decoration has a pattern of smooth surface elements which run in a grid-like manner and which surround or delimit the decorative surfaces, and the second surface elements in the decorative surfaces at least substantially reproduce a shadow or a copy of the pattern or a part of the pattern in a slightly offset manner in the circumferential direction and in the radial direction with respect to the pattern, wherein the rest of the respective structured surface of the decorative surfaces is made of at least one first surface element.

WO 2019/111828 A1 (D2) relates to having: a decorative section formed in a tire side section (tire outer surface) and having a base surface; and first and second low-brightness areas (a plurality of first pattern areas) having a plurality of protrusions formed at intervals of 0.1-1.0 mm and protruding to a height of 0.1-1.0 mm from the base surface of the decorative section. The gaps between the protrusions differ from each other in the plurality of first pattern areas.

EP 3 747 674 A1 (D3) relates to a pneumatic tire, a side portion located between a tread portion and a bead portion, includes a decorative element. The decorative element comprises a plurality of linear protrusions extending along a surface of the side portion and bending to form a hook shape. The linear protrusions are disposed at intervals with tips of the hooks aligned in the same direction. Each of the linear protrusions includes a first portion and a second portion. The first portion is extending from an inner side in the tire radial direction to an outer side in the tire radial direction. The second portion is extending from a bend position of each one of the linear protrusions and forming an angle of 90° or greater with the first portion at the bend position. In the pneumatic tire, each bend position mutually differs in position in the tire radial direction between the linear protrusions, and the interval between adjacent linear protrusions is wider at the second portion than at the first portion.

### SUMMARY OF INVENTION

### Technical Problem

An object of the present invention is to provide a tire capable of broadening a width of expression of a decorative section.

### Solution to Problem

A tire of a first aspect includes plural large pattern areas that are disposed along a tire circumferential direction on a tire outside surface, that are each formed by recesses and protrusions, and that are partitioned by smooth surfaces. The large pattern areas are each configured including a first pattern area and a second pattern area that is disposed adjacent to the first pattern area and that has a higher luminance than the first pattern area. The first pattern area comprises a plurality of regions that have different sizes and shapes to each other. The second pattern area comprises a plurality of regions that have different sizes and shapes to each other. The first pattern area has a shape that is symmetrical to the second pattern area.

In the tire according to the first exemplary embodiment, the tire outside surface is decorated by providing the plural large pattern areas on the tire outside surface, with the large pattern areas each being configured including the first pattern area and the second pattern area disposed adjacent to the first pattern area and having a higher luminance than the first pattern area formed by recesses and protrusions, with the large pattern areas partitioned by smooth surfaces. This thereby enables the width of expression to be broadened at the portion provided with the large pattern areas, in other words at the decorated portion decorated on the tire outside surface.

A tire according to a second aspect is the tire according to a first aspect, wherein there are plural of the large pattern areas disposed in a tire radial direction on a tire side section.

In the tire according to the second exemplary embodiment, the large pattern areas are provided to the tire side section, thereby enabling the width of expression to be broadened at the portion of the tire side section provided with the large pattern areas, in other words at the decorated portion of the tire side section.

Moreover, there are plural of the large pattern areas disposed in the tire radial direction, thereby enabling the width of expression to be broadened compared to cases in which there are not plural of the large pattern area disposed in the tire radial direction.

A tire according to a third aspect is the tire according to the first aspect or the second aspect, wherein plural of at least one of the first pattern area or the second pattern area are provided in a single one of the large pattern areas.

In the tire according to the third aspect, there are plural of the at least one of the first pattern area or the second pattern area provided in a single one of the large pattern areas, thereby enabling the width of expression to be broadened compared to cases in which there are not plural of the at least one out of the first pattern area or the second pattern area provided in a single of the large pattern areas.

### Advantageous Effects

The tire of the present invention as describe above exhibits the excellent advantageous effect of enabling the width of expression of a decorative section of a tire outside surface to be broadened.

### BRIEF DESCRIPTION OF DRAWINGS

Fig. 1 is a plan view illustrating a decorative section formed to a tire side section of a tire according to a first exemplary embodiment.
Fig. 2 is an expanded plan view illustrating a decorative section.
Fig. 3A is an expanded plan view illustrating part of a first pattern area.
Fig. 3B is an expanded plan view illustrating part of a second pattern area.
Fig. 4 is a cross-section illustrating a first asterisk protrusion.
Fig. 5 is a plan view illustrating a decorative section formed to a tire side section of a tire according to a second exemplary embodiment.
Fig. 6 is an expanded plan view illustrating a large pattern area of a tire according to the second exemplary embodiment.
Fig. 7 is an expanded plan view illustrating a large pattern area according to another exemplary embodiment.

### DESCRIPTION OF EMBODIMENTS

### First Exemplary Embodiment

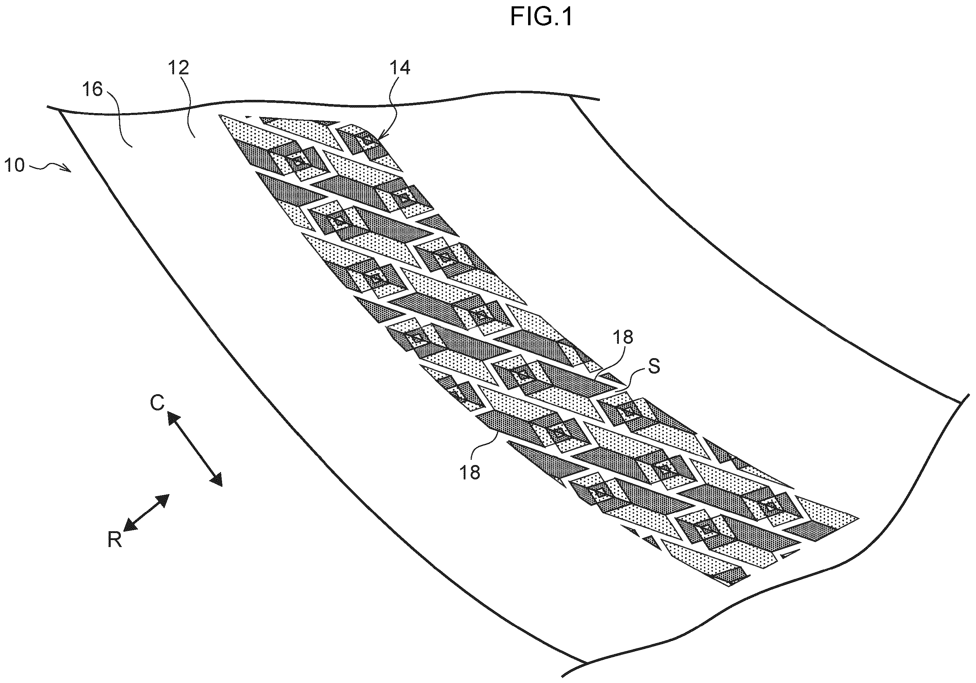

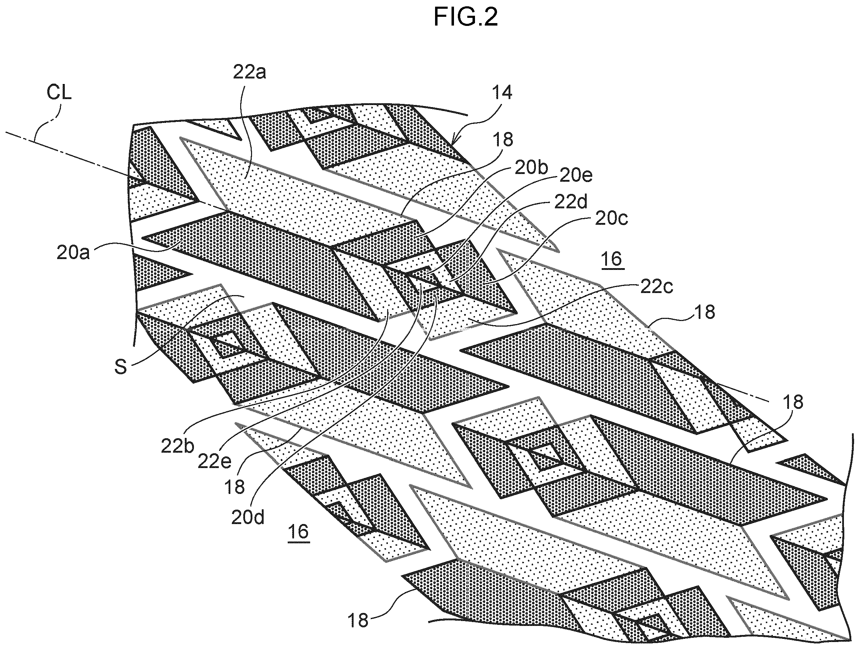

Description follows regarding a tire 10 according to a first exemplary embodiment of the present invention, with reference to Fig. 1 to Fig. 4. Note that arrow C illustrated in the drawings indicates a tire circumferential direction, and arrow R indicates a tire radial direction.

As illustrated in Fig. 1, a decorative section 14 is provided extending in the tire circumferential direction (arrow C direction) on a tire side section 12 that serves as an example of an outer surface of the tire 10. The decorative section 14 has a circular arc shape when viewed along an axial direction of the tire 10, and is disposed at a freely selected position in the tire circumferential direction.

Other than at the decorative section 14, the tire side section 12 has a smooth surface similar to a normal tire. Note that, as appropriate, a portion of the tire side section 12 configured by the smooth surface is called a base surface 16.

The decorative section 14 includes plural large pattern areas 18. Plural of the large pattern areas 18 are disposed along the tire radial direction (arrow R direction) and plural thereof are disposed along the tire circumferential direction (arrow C direction). The large pattern areas 18 of the present exemplary embodiment are formed in substantially arrow-feather shapes in plan view of the tire side section 12, and large pattern areas 18 that are adjacent to each other in the tire radial direction are disposed facing in opposite directions.

A space S configured by a smooth surface is provided between a large pattern area 18 and an adjacent large pattern area 18 so as to be connected to the base surface 16. In other words, the large pattern areas 18 are partitioned by smooth surfaces.

Note that there are preferably three or more of the large pattern areas 18 disposed in the tire circumferential direction, and more preferably five or more thereof.

The large pattern areas 18 are each configured including a first pattern area 20, and a second pattern area 22 disposed adjacent to the first pattern area 20 and having a higher luminance than the first pattern area 20.

The first pattern area 20 is configured including a region 20a, a region 20b, a region 20c, a region 20d, a region 20e, and the like that have different sizes and shapes to each other.

The second pattern area 22 is configured including a region 22a, a region 22b, a region 22c, a region 22d, a region 22e, and the like that have different sizes and shapes to each other.

Note that the region 20a, the region 20b, the region 20c, the region 20d, and the region 20e of the first pattern area 20 have shapes that are symmetrical to the region 22a, the region 22b, the region 22c, the region 22d, and the region 22e of the second pattern area 22 about an axis of symmetry CL.

Next, the first pattern area 20 has a lower luminance than the base surface 16 and appears blacker than the base surface 16. The second pattern area 22 has a higher luminance than the first pattern area 20 and a lower luminance than the base surface 16. Namely, luminance decreases in a sequence of the base surface 16, then the second pattern area 22, and then the first pattern area 20, and also the second pattern area 22 appears blacker than the base surface 16, the first pattern area 20 appears blacker than the second pattern area 22, and the first pattern area 20 appears the blackest.

Note that the first pattern area 20 and the second pattern area 22 can be formed on the surface of the tire side section 12 by providing a mold for molding the tire 10 with fine recesses and protrusions at portions corresponding to the first pattern area 20 and the second pattern area 22.

Fine protrusions projecting from the base surface 16 are formed to the first pattern area 20 and the second pattern area 22, with these resulting in recesses and protrusions on the surface of each of the first pattern area 20 and the second pattern area 22.

First asterisk protrusions 34 and second asterisk protrusions 36 serving as examples of protrusions are formed similarly to each other on the first pattern area 20 and the second pattern area 22.

The shapes of the first asterisk protrusions 34 and the second asterisk protrusions 36 are similar to each other in each of these areas. Moreover, a pitch P between mutually adjacent first asterisk protrusions 34 and mutually adjacent second asterisk protrusions 36 is varied according to a homothetic ratio.

As described above, the shapes of the first asterisk protrusions 34 and the second asterisk protrusions 36 are similar in each of these areas. In the following description the first pattern area 20 will be given as an example of the shape of the first asterisk protrusions 34 and the second asterisk protrusions 36.

### First Pattern Area 20

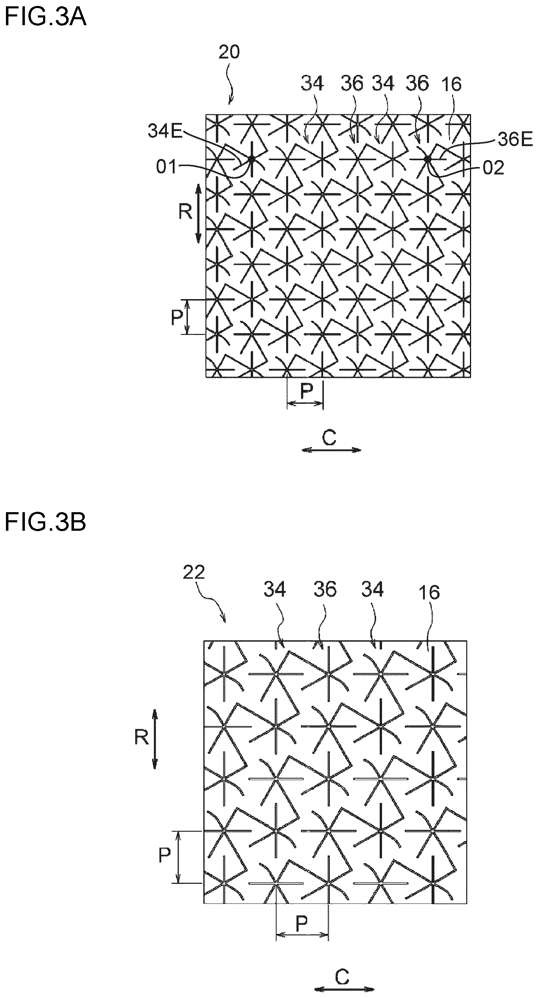

As illustrated in Fig. 3A, the first pattern area 20 includes the plural first asterisk protrusions 34 and the plural second asterisk protrusions 36 projecting from the base surface 16. The first asterisk protrusions 34 and the second asterisk protrusions 36 are disposed alternately to each other in the tire circumferential direction and in the tire radial direction.

### First Asterisk Protrusions 34

As illustrated in Fig. 3A, as viewed in a direction orthogonal to the base surface 16 (a rotation axis direction of the tire 10), the first asterisk protrusions 34 include plural, six in the present exemplary embodiment, extension portions 34E extending in different respective directions to each other from a center O1 serving as an origin point.

A 60° angle is formed between adjacent extension portions 34E out of the six extension portions 34E. In other words, the six extension portions 34E extend from the center O1 in a radial shape to form each of the first asterisk protrusions 34.

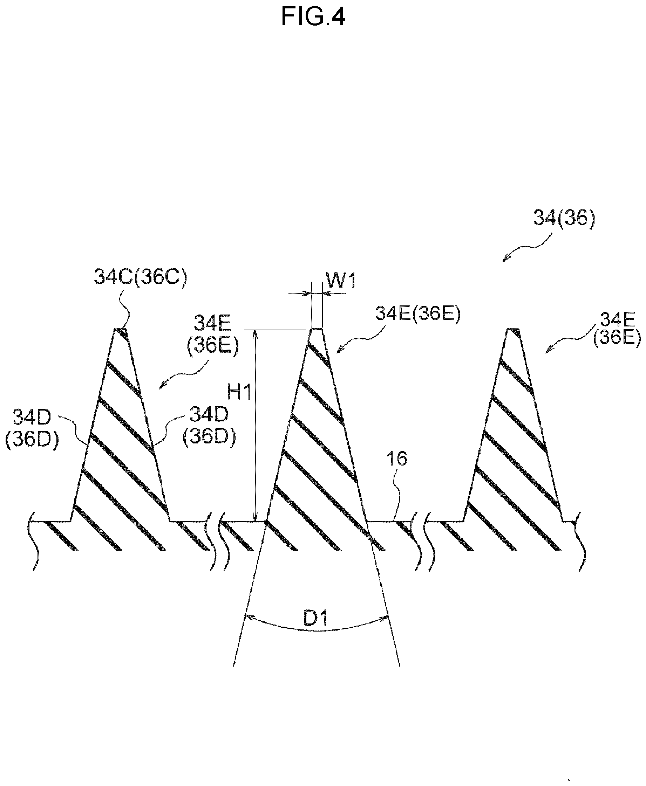

As illustrated in Fig. 4, each of the extension portions 34E of the first asterisk protrusion 34 has a substantially isosceles triangle shaped cross-section profile including a flat apex face 34C as sectioned along a direction orthogonal to its extension direction. Namely, each of the first asterisk protrusions 34 includes the apex face 34C and a pair of side faces 34D. In the present exemplary embodiment, a width (W1 in the drawings) of the apex face 34C is 0.02 mm, and an apex angle (D1 in the drawings) of the first asterisk protrusion 34 is 26°. A height (H in the drawings) of the first asterisk protrusion 34 is a predetermined single value from 0.05 mm to 1.0 mm. Molding the protrusions is difficult in cases in which the height of the protrusion (projection height) is less than 0.05 mm, and there is a concern that it might not be possible to attenuate incident light sufficiently to lower the luminance to a degree that appears black. Making the height of the protrusion 1.0 mm or less means that any difference between the rigidity of portions including the protrusions and the rigidity of portions surrounding the protrusions is reduced, so as to thereby suppress localized concentration of stress.

Note that dimensions such as the height of the protrusions and pitch (interval) of the protrusions, described later, in the present exemplary embodiment may, for example, be measured using the One-Shot 3D Measuring Macroscope, VR-3000 Series, manufactured by Keyence Corporation.

### Second Asterisk Protrusion 36

As illustrated in Fig. 3A, the second asterisk protrusions 36 have similar shapes to the first asterisk protrusions 34. More specifically, as viewed along a direction orthogonal to the base face 16, each of the second asterisk protrusions 36 has a shape obtained by rotating a first asterisk protrusion 34 clockwise through 90° about its center O1, and then further performing top-to-bottom inversion of the first asterisk protrusion 34 that has been rotated by 90° about its center O1. Namely, the second asterisk protrusions 36 each include the six extension portions 36E extending in different directions from a center O2 serving as an origin point, with the extension portions 36E each including an apex face 36C and side faces 36D.

The first asterisk protrusions 34 and the second asterisk protrusions 36 are disposed alternately to each other in the tire circumferential direction and in the tire radial direction so as to fill the entirety of each region.

A pitch (hereafter referred to as a pitch P) between the center O1 and the center O2 of the first asterisk protrusions 34 and the adjacent second asterisk protrusions 36 that are adjacent in the tire radial direction and in the tire circumferential direction is a predetermined single value from 0.1 mm to 1.0 mm. Molding the protrusions becomes difficult in cases in which the pitch P is less than 0.1 mm. In cases in which the pitch P is greater than 1.0 mm, there is a concern that it might not be possible to attenuate incident light sufficiently to lower the luminance to a degree that appears black.

### Second Pattern Area 22

Next, description follows regarding the second pattern area 22.

As illustrated in Fig. 3B, first asterisk protrusions 34 and second asterisk protrusions 36 similar in shape to those of the first pattern area 20 are formed in the second pattern area 22, but the density of the protrusions formed is lower than the density of the protrusions formed in the first pattern area 20. The second pattern area 22 accordingly appears relatively brighter than the first pattern area 20.

The first pattern area 20 and the second pattern area 22 of the present exemplary embodiment are areas having, as an example, a luminance L* value of less than 20 as measured using a Handy Spectrophotometer (NF333) manufactured by Nippon Denshoku Industries Co., Ltd. The luminance L* value ranges from 0 to 100, with values close to 0 appearing black, and values close to 100 appearing white.

In the present exemplary embodiment the luminance L* value of the base surface 16 is, as an example, set to 23, the luminance L* value of the second pattern area 22 is, as an example, set to 15, and the luminance L* value of the first pattern area 20 is, as an example, set to 5. Note that the luminance L* value of each region may be appropriately modified as required.

Note that in a single decorative section 14 a total surface area occupied by the first pattern area 20 and the second pattern area 22 may, for example, be in a range of from 50% to 95%.

### Operation and Advantageous Effects

Next, description follows regarding the operation and advantageous effects of the tire 10 of the present exemplary embodiment.

In other areas of the tire side section 12 not formed with the protrusions, namely at the base surface 16, incident light is reflected toward the outside by the smooth outer surface configuring the base surface 16.

In contrast thereto, in the first pattern area 20 and the second pattern area 22, the incident light to the first asterisk protrusions 34 and the second asterisk protrusions 36 hits the side faces 34D, 36D illustrated in Fig. 4. The incident light is then attenuated while being repeatedly reflected by opposing side faces 34D, 36D before being reflected outside. This means that the first pattern area 20 and the second pattern area 22 appear blacker than the base surface 16.

Furthermore, due to the apex angles of each of the protrusions being similar to each other, the region occupied by the base surface 16 per unit surface area of the second pattern area 22 is wider than the region occupied by base surface 16 per unit surface area of the first pattern area 20.

This means that the quantity of light reflected outside at the second pattern area 22 is greater than the quantity of light reflected outside at the first pattern area 20. Namely, the luminance L* of the second pattern area 22 is higher than that of the first pattern area 20. In other words, the second pattern area 22 appears relatively brighter than the first pattern area 20, and the first pattern area 20 appears relatively blacker than the second pattern area 22.

In this manner, the decorative section 14 is provided with the plural large pattern areas 18 that are each configured including the first pattern areas 20 and the second pattern areas 22, which are disposed adjacent to the first pattern areas 20 and have a higher luminance than the first pattern areas 20, with the large pattern areas 18 partitioned by the spaces S that have a smooth surface. This thereby enables the decorative section 14 of the present exemplary embodiment to be have a broader width of expression than a decorative section not having such a configuration.

Note that visibility of the large pattern areas 18 can be raised by deciding a width of the spaces S such that the total surface area in a single decorative section 14 occupied by the first pattern areas 20 and the second pattern area 22 is in a range of from 50% to 95%.

### Second Exemplary Embodiment

Next, description follows regarding the tire 10 according to a second exemplary embodiment of the present invention. The same reference numerals will be appended to configuration the same as that of the first exemplary embodiment, and explanation thereof will be omitted.

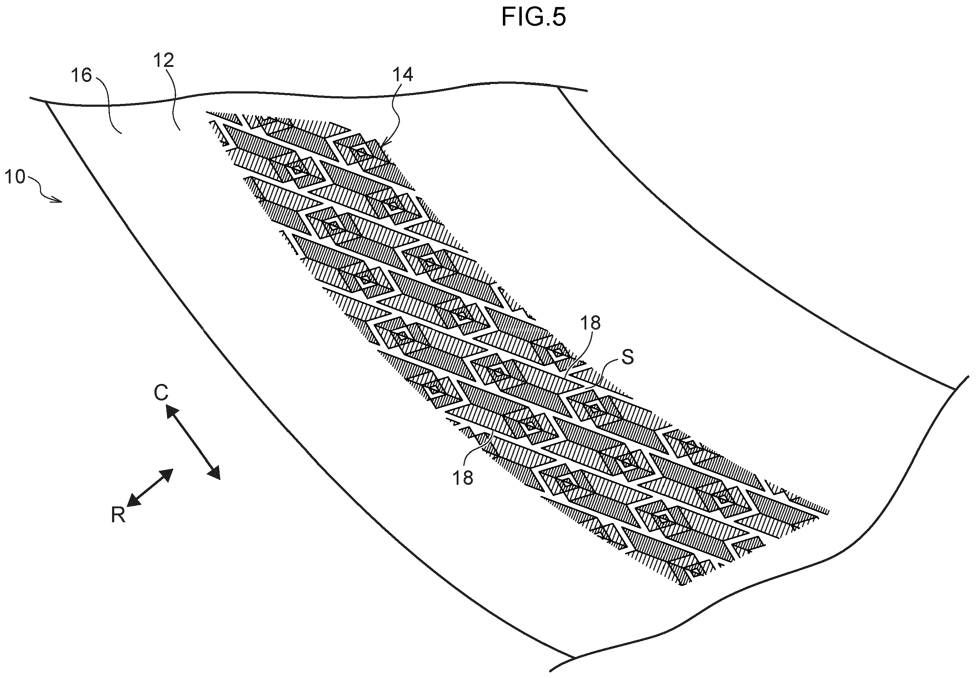

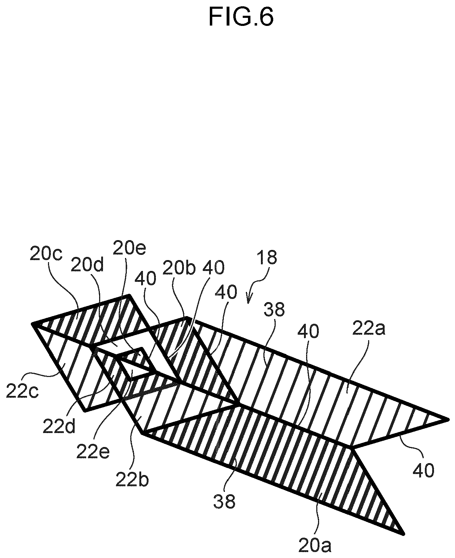

As illustrated in Fig. 5 and Fig. 6, the tire 10 of the present exemplary embodiment includes large pattern areas 18 provided to a tire side section 12 and having a similar outline to in the first exemplary embodiment.

As illustrated in Fig. 6, the large pattern areas 18 of the present exemplary embodiment each include a region 20a, a region 20b, a region 20c, a region 20d, a region 20e, a region 22a, a region 22b, a region 22c, a region 22d, and a region 22e formed with outlines similar to in the large pattern areas 18 of the first exemplary embodiment, however the shape of the protrusions in each of these regions differs from in the first exemplary embodiment.

As an example of the protrusions, plural rib shaped protrusions 38 are provided extending in a straight line shape in the region 20a, the region 20b, the region 20c, the region 22a, the region 22b, and the region 22c. The rib shaped protrusions 38 may, in other words, be called ridges (protrusions of a mountain ridge shape, see Fig. 4). Note that in the large pattern areas 18 of the present exemplary embodiment, the region 20d, the region 20e, the region 22d, and the region 22e are configured by smooth surfaces. Note that border portions at the outer periphery of each region of the present exemplary embodiment are formed with rib shaped protrusions 40 similar to the rib shaped protrusions 38.

The height of the rib shaped protrusions 38 is, as an example, 0.15 mm, the apex angle thereof is, as an example, 35°. A height of the rib shaped protrusions 40 is, as an example, 0.2 mm, and the apex angle thereof is, as an example, 35°. These heights and apex angles may be modified as appropriate.

The rib shaped protrusions 38 are parallel to one direction, with a pitch P between a center of one rib shaped protrusion 38 and a center of an adjacent other rib shaped protrusion 38 similar to the pitch between the first asterisk protrusions 34 and the second asterisk protrusions 36 illustrated in Fig. 3A and Fig. 3B.

In the present exemplary embodiment too, the pitch P of the rib shaped protrusions 38 in the second pattern areas 22 is wider than the pitch P of the rib shaped protrusions 38 in the first pattern areas 20, such that the second pattern areas 22 are configured so as to appear relatively brighter than the first pattern areas 20.

### Other Exemplary Embodiments

Although exemplary embodiments of the present invention have been described, the present invention is not limited to the above, and obviously various modifications other than the above may be implemented within the scope of the claims.

For example, although in the first exemplary embodiment described above the first asterisk protrusions 34 and the second asterisk protrusions 36 were linked together, they may be configured so as not be linked together.

Although the apex angle of the protrusions such as the first asterisk protrusions 34, the second asterisk protrusions 36, and the like is 26° (for example D1 in Fig. 4), another apex angle may be employed. The larger the apex angle D1 the greater the proportion of reflected light reflected at the side faces 34D, 36D returning in the incident direction, resulting in a relatively high luminance L*.

In the exemplary embodiments described above, as examples of the protrusions, examples of the first asterisk protrusions 34 and the second asterisk protrusions 36 provided with the plural extension portions 34E extending in a radial shape and the rib shaped protrusions 38 extending in a straight line shape are given, however the present invention is not limited thereto, and a plan view shape of the protrusions is not limited to being a radial shape or a straight line shape, and may be so-called embossed pattern. Such an embossed pattern is a pattern including, for example, a leather pattern, a satin pattern, a wood grain pattern, a cloth pattern, and a geometric pattern.

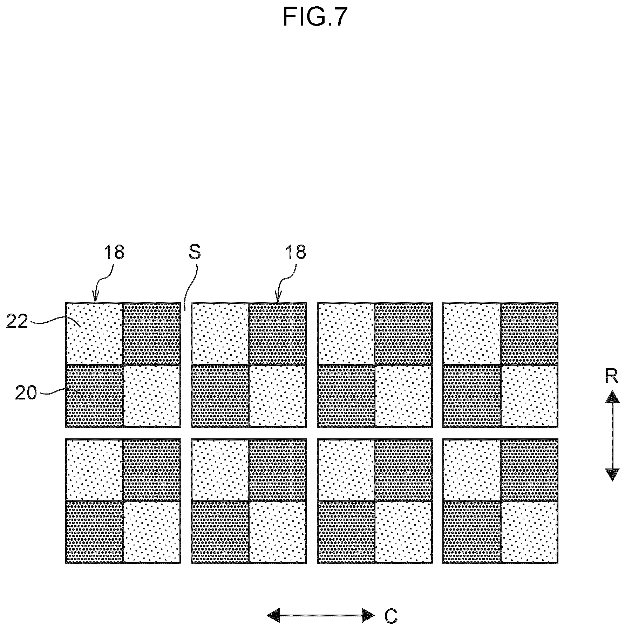

Moreover, the first pattern areas 20 and the second pattern areas 22 are not limited to the shapes illustrated in the exemplary embodiments described above and may, for example, be any freely selected shape such as a rectangular shape or the like, as illustrated in Fig. 7.

Although large pattern areas 18 of the exemplary embodiments described above include two pattern areas of different luminance, three or more pattern areas of different luminance may be provided thereto.

## Claims

1. A tire (10) comprising a plurality of large pattern areas (18) that are disposed along a tire circumferential direction (C) on a tire outside surface (12), that are each formed by recesses and protrusions, and that are partitioned by smooth surfaces (S), wherein:
each of the large pattern areas (18) includes a first pattern area (20) and a second pattern area (22) that is disposed adjacent to the first pattern area (20) and that has a higher luminance than the first pattern area (20);
the first pattern area (20) comprises a plurality of regions (20a, 20b, 20c, 20d, 20e) that have different sizes and shapes to each other;
the second pattern area (22) comprises a plurality of regions (22a, 22b, 22c, 22d, 22e) that have different sizes and shapes to each other; and
the first pattern area (20) has a shape that is symmetrical to the second pattern area (22).

2. The tire (10) of claim 1, wherein there is a plurality of the large pattern areas (18) disposed in a tire radial direction (R) on a tire side section (12).

3. The tire of claim 1 or claim 2, wherein a plurality of at least one of the first pattern area (20) or the second pattern area (22) is provided in a single one of the large pattern areas (18).

## Patentansprüche

1. Reifen (10), umfassend eine Vielzahl von großen Musterbereichen (18), die entlang einer Reifenumfangsrichtung (C) auf einer Reifenaußenfläche (12) angeordnet sind, die jeweils durch Vertiefungen und Vorsprünge gebildet sind und die durch glatte Oberflächen (S) unterteilt sind, wobei:
jeder der großen Musterbereiche (18) einen ersten Musterbereich (20) und einen zweiten Musterbereich (22) einschließt, der angrenzend an den ersten Musterbereich (20) angeordnet ist und eine höhere Leuchtdichte als der erste Musterbereich (20) aufweist;
der erste Musterbereich (20) eine Vielzahl von Regionen (20a, 20b, 20c, 20d, 20e) umfasst, die zueinander unterschiedliche Größen und Formen aufweisen;
der zweite Musterbereich (22) eine Vielzahl von Regionen (22a, 22b, 22c, 22d, 22e) umfasst, die zueinander unterschiedliche Größen und Formen aufweisen; und
der erste Musterbereich (20) eine Form aufweist, die symmetrisch zu dem zweiten Musterbereich (22) ist.

2. Reifen (10) nach Anspruch 1, wobei eine Vielzahl der großen Musterbereiche (18) in einer Reifenradialrichtung (R) auf einem Reifenseitenabschnitt (12) angeordnet ist.

3. Reifen nach Anspruch 1 oder Anspruch 2, wobei eine Vielzahl von mindestens einem von dem ersten Musterbereich (20) oder dem zweiten Musterbereich (22) in einem einzigen der großen Musterbereiche (18) bereitgestellt ist.

## Revendications

1. Pneu (10) comprenant une pluralité de grandes zones de motifs (18) qui sont disposées le long du sens de la circonférence (C) du pneu sur une surface extérieure de pneu (12), qui sont chacune formées par des renfoncements et saillies, et qui sont séparées par des surfaces lisses (S), dans lequel :
chacune des grandes zones de motifs (18) comprend une première zone de motifs (20) et une deuxième zone de motifs (22) qui est disposée de façon adjacente à la première zone de motifs (20) et qui a une luminance supérieure à celle de la première zone de motifs (20) ;
la première zone de motifs (20) comprend une pluralité de régions (20a, 20b, 20c, 20d, 20e) qui ont des tailles et formes différentes les unes des autres ;
la deuxième zone de motifs (22) comprend une pluralité de régions (22a, 22b, 22c, 22d, 22e) qui ont des tailles et formes différentes les unes des autres ; et
la première zone de motifs (20) a une forme qui est symétrique par rapport à la deuxième zone de motifs (22).

2. Pneu (10) selon la revendication 1, dans lequel une pluralité des grandes zones de motifs (18) est disposée dans le sens radial (R) du pneu sur une section latérale de pneu (12).

3. Pneu selon la revendication 1 ou la revendication 2, dans lequel une pluralité de la première zone de motifs (20) et/ou de la deuxième zone de motifs (22) est prévue dans une seule des grandes zones de motifs (18).
